# EUROPEAN PATENT SPECIFICATION

(11) **EP 4 074 539 B1**
(45) Date of publication and mention of the grant of the patent: **16.09.2026**
(21) Application number: 22162326.7
(22) Date of filing: 15.03.2022
(51) Int. Cl.: B60L 53/14, B65H 75/44

(54) **METHOD AND A SYSTEM FOR CONTROLLING USE OF A CABLE OR TUBE, IN PARTICULAR A CABLE OF AN ELECTRIC VEHICLE CHARGING STATION**
VERFAHREN UND SYSTEM ZUR STEUERUNG DER VERWENDUNG EINES KABELS ODER ROHRES, INSBESONDERE EINES KABELS EINER LADESTATION FÜR ELEKTROFAHRZEUGE
PROCÉDÉ ET SYSTÈME PERMETTANT DE COMMANDER L'UTILISATION D'UN CÂBLE OU D'UN TUBE, EN PARTICULIER D'UN CÂBLE D'UNE STATION DE CHARGE DE VÉHICULE ÉLECTRIQUE

(30) Priority: 14.04.2021 CH 3902021
(43) Date of publication of application: 19.10.2022
(73) Proprietor: Evtec AG, 6012 Kriens-Obernau (CH)
(72) Inventor: KRAMIS, Markus, 6020 Emmenbrücke (CH); BUCHER, Roland, 6280 Hochdorf (CH)
(74) Representative: M. Zardi & Co S.A.

(56) References cited:
- WO-A1-2017/222557
- CA-A1- 3 063 663
- DE-A1- 102018 122 828

## Description

### Field of application

The present invention relates to a method and a system for controlling use of a tube or cable such as a tube for supplying water, oil or air.

The present invention, in particular, relates to a method and a system for controlling a charging cable of an electric vehicle charging station including a base station, wherein the charging cable has an end electrically connected to the base station inside the base station, and a free end adapted to be connected to an electric vehicle for recharging.

The present invention further relates to a method and a system for controlling use of the charging cable of the electric vehicle charging station mentioned above.

### Prior art

Due to the spread of electric vehicles in the last decade, electric vehicle charging stations are also spreading, in particular charging stations which are adapted for providing fast and easy way for the user to recharge. In this respect, it is well known that a charging station comprises a base station, generally in the form of a column, and a charging cable electrically connected to the base station at one end, and by means of which the electric vehicle is recharged.

The charging cable, which is suitable for conductive charging (not for inductive ones) in the technical filed at issue, has one end connected to the base station and another end provided with a connector to be plugged at an electric vehicle recharging port. The length of the charging cable is of some meters, for instance from three to five meters, in order to cover a distance between the electric vehicle and the base station. Although longer lengths might allow parking the vehicle more distant from the base station, it is also known that such longer lengths complicate handling the charging cable.

It may for instance happen at a charging station that the charging cable, after use, is not properly wound and correctly repositioned by a user at the base station so has the following user has to untangle the charging cable before use. In some other cases, the user does not wound at all the charging cable after use with the result that the cable remains annoyingly bulky on the ground.

Moreover, but not secondarily, if the cable is lining on the ground and the vehicle is moved over it, the cable can be damaged, therefore causing possible safety issues, for instance due to sparks generated by the plug falling to the ground. To prevent security issues, any kind of sparks have to be prevented.

On the other hand, a short charging cable in not suitable for obvious reasons of easy of parking and of use of the space around the base station.

In order to reduce these problems, certain charging stations are provided with a spring-shaped charging cable which is self-recalled at the base station. These charging stations partially solves the problem of the cable messily on the ground after use, but however they do not actually solve other issues, such as the possibility of twists due to unappropriated pulls of the cable. Moreover, the cross section of certain charging cables may be too large to make convenient the spring shape, for instance because it is too burdensome for the user to pull the cable towards the electric vehicle against the force of the spring, when the cable has to be plugged to the electric vehicle, or because such force of recalling the cable to the base station is too high, after the cable is unplugged from the electric vehicle.

Last but not least, an unconditionally recall of the charging cable towards the base station at any stage of use may produce side effects at charging time, when it is undesirable that a force is active on the charging cable. To the contrary, it would be more appropriate to avoid interreferences on the cable during charge, leaving the cable free and the connector undisturbed at the port of the electric vehicle.

The problem at the base of the present disclosure is to provide a charging station with a charging cable of sufficient length, while avoiding undesired damage or stress of the cable, in particular during repositioning or winding, and while reducing stress at the electric vehicle port during recharge. A further problem is to provide a mechanism and system for assisting retraction of the charging cable after recharge is completed, wherein the retraction or extension of a second cable structurally associated with the charging cable can be selectively locked or unlocked.

DE 10 2018 122828 and WO 2017/222557 are examples of electric vehicle charging station. CA 3 063 663 A1 discloses an electric vehicle charging station with a charging cable retrieving system using an auxiliary mechanical wire and an electromagnetically controlled blocking mechanism.

### Summary of the invention

The idea of solution at the base of the present invention is to provide a charging station with a control mechanism for a charging cable, the control mechanism being adapted to safeguard a position of the cable when its connector is plugged at the electric vehicle for recharge and to retract the charging cable to a base station after recharge is completed. A charging station for recharging an electric vehicle according to the present invention is defined in claim 1.

A load balancer device for a charging station according to the present invention is claimed in claim 10.

The control mechanism is controlled electrically by the charging station. More particularly, retraction of the cable is enabled based on one or more controls, for instance by controlling end of the recharge and, in addition, a force applied at the cable by the user to unplug the cable after the recharge is completed.

The control mechanism is a load balancer controlled by the charging station in a locking or unlocking status.

Based on the solution idea mentioned above, the technical problem is solved by an electric vehicle charging station including
- a base station,
- a charging cable having an end electrically connected to the base station inside the base station and a free end adapted to be connected to an electric vehicle for recharging, in particular to a port of the electric vehicle;
   the electric vehicle charging station being characterized by including a load balancer device including
- a second cable and
- a locking system,

the second cable being associated, in particular mechanically or structurally associated, to the charging cable and
the locking system being configured to lock retraction or extension of the second cable in a first operating state and to unlock retraction or extension of the second cable in a second operating state, wherein
the base station is configured to drive the locking system in the first or second operating state, along with the features as claimed in claim 1.

The load balancer device includes at least one magnet steel blade and (at least) an electromagnet coupled to the magnet steel blade, wherein the electromagnet is driven by the base station and the magnet steel blade is structurally connected to a cable support on which the second cable is wound inside the load balancer. Lock of the second cable by means of lock of the magnet steel blades determine also a lock of the charging cable.

The magnet steel blade is preferably associated to four electromagnets arranged at an angular distance of 90° on the magnet steel blade. The magnet steel blade is for instance a plate of a same diameter of a plate forming the cable support for the second cable inside the load balancer.

The base station is configured to drive the load balancer device in the first operating state during recharge of the electric vehicle, in particular from the time when the connector of the charging cable is plugged to the electric vehicle port or from the time when the recharge of the vehicle is started, based on a standard protocol for recharge, up to when the recharge is terminated, still based on the standard protocol for recharge. Retraction of the second cable and therefore of the charging cable in not allowed in the first operating state.

The base station is for instance configured to detect the first operating state by means of the communication lines of the charging cable, adapted to communicate with the electric vehicle. Advantageously, retraction of the second cable and therefore of the charging cable is determined by the base station depending on a status of the communication lines, the status being determined by the safe protocol implemented to recharge the electric vehicle by means of the communication lines.

In another aspect, the base station is configured to drive the load balancer device in the second operating state if no recharge is ongoing (not still started or already ended) and, in addition, after a load is manually applied to the charging cable, in particular after the recharge is terminated. Advantageously, according to this aspect, the second cable and the charging cable are still locked after the recharge, and they are released for retraction only as a consequence of a manual operation, which may prevent undue or uncontrolled pulls at the vehicle plug.

The base station may also be configured to drive the load balancer device in the second operating state with a predetermined delay after the load is manually applied to the charging cable for removing the cable from a plug of the vehicle. This allows ensuring that the user has sufficient time to safely handle the charging cable before retraction.

In one embodiment, the load balancer device includes a support attached to a portion of the charging cable at a predetermined distance from the end of the charging cable and attached to an end of the second cable. By means of the support and of the second cable locked, the charging cable may be suspended at the support at a predetermined height from the ground, while the connector is plugged at the vehicle port. For instance, and without limiting purpose, in case of a charging station for recharging electric cars, the height is preferably between 900 cm and 1500 cm, preferably 1200 cm. At that height, the support is distanced from base station from 1600 cm to 2500 cm, preferably 2100 cm. However, other distances may be set.

In one embodiment, the second cable in the second operation state of the locking system forms at the end of the second cable a predetermined angle with respect to a line 6 parallel to the ground. The angle is preferably between 10° and 60°. The angle provides an optimum curvature to the charging cable between the end connected to the base station and the support. The support is fixed on the charging cable, and the length of the portion of the cable extended from the support to the second end of the cable, i.e. the end adapted to connect to the electric vehicle port, is also predetermined, so as also the curvature of such portion of the cable is optimal.

In an embodiment, the charging station includes more than one load balancer. For instance, at least another load balancer device including another second cable and another locking system 44, said another second cable being structurally or mechanically associated to another charging cable and said another locking systems being configured to lock retraction or extension of said another second cable in a first operating state of said another second cable and to unlock retraction or extension of said another second cable in a second operating state of said another second cable, the base station being configured to drive said another locking system in the first or second operating state independently from the locking system of said load balancer device.

The technical problem mentioned above is also solved by a load balancer device adapted to be mounted to a charging station of an electric vehicle, wherein the load balancer device including a second cable and a locking system, the second cable being adapted to be mechanically or structurally associated to a charging cable of the recharging station and the locking system being configured to lock retraction or extension of the second cable in a first operating state and to unlock retraction or extension of the second cable in a second operating state, wherein the first and the second operating state are determined based on an electric voltage received from the load balancer device by the charging station, the load balancer further including the features of claim 10. The load balancer device includes at least one magnet, for example in the form of a steel blade, and an electromagnet coupled to the magnet, the electromagnet being adapted to be driven by the base station, when the base station applies the electric voltage to the electromagnet, so as the magnet steel blade lock a cable support of the second cable which is mechanically or structurally connected to magnet steel blade.

The technical problem mentioned above is also solved by a load balancer device adapted to be mounted in a different position with respect to a charging station of an electric vehicle. This is for instance the case when the charging station and the corresponding base station are positioned at a first place, such as on the ground, and the load balancer is positioned at another place remotely from the first place, for instance at a ceiling. In this case, the load balancer device still includes a second cable and a locking system, the second cable is still adapted to be mechanically or structurally associated to a charging cable of the recharging station, and the locking system is still configured to lock retraction or extension of the second cable in a first operating state and to unlock retraction or extension of the second cable in a second operating state, wherein the first and the second operating state may be still determined based on an electric voltage received from the load balancer device by the charging station.

However, the load balance is not structurally mounted to the base station but it is installed remotely from it. Feature already described above (for the embodiment for a local installation of the load balancer) may be implemented also for this embodiment (for a remote installation of the load balancer), and therefore are not completely repeated. Just to cite one, the load balancer device may include at least one magnet, in the form of a steel blade, and an electromagnet coupled to the magnet, and the electromagnet may be adapted to be driven by the base station.

In the remote installation, the load balancer may be driven by the base station by means of an electrical wired or wireless connection for sending signals from the base station to load balancer device. When the base station sends a predetermined locking signal an electric voltage is applied to the electromagnet, so as the magnet steel blade lock a cable support of the second cable which is mechanically or structurally connected to the magnet steel blade. The load balancer may be powered by a battery, by means of a power line derived from the base station or another power line.

A method for controlling use of the charging cable of the electric vehicle charging station mentioned above which is implemented by means of the charging station above mentioned, according to the description given below.

Indeed, further details of the charging station, the load balancer device and the method for controlling use of the charging cable of the charging station are given in the description below, with reference to the annexed drawings as example of possible embodiments.

Moreover, the load balancer device as disclosed is also adapted to control a tube or a cable for other applications, just to cite some to control a tube or cable for supplying water, oil or air. In a same way as disclosed for application with the electric charging station, the load balancer device may be mounted locally, for instance where a machinery for supplying water, oil or air into the tube is installed, or remotely therefrom.

The load balancer device for such other uses also includes, in same way as disclosed in connection with the use of the load balancer device for electric charging station, a second cable and a locking system, the second cable being adapted to be mechanically or structurally associated to the cable or tube for providing, for instance, water, oil or air. The locking system is configured to lock retraction or extension of the second cable in a first operating state and to unlock retraction or extension of the second cable in a second operating state, wherein the first and the second operating state are determined based on an electric voltage received from the load balancer device by the machinery for supplying, for instance, water, oil or air into the tube. Of course, the electric voltage may be received from the load balancer device by another device, based on a signal provided by the machinery, this being for instance the case where the machinery is placed remotely from the load balancer device and the load balanced device is powered by a power source such as a battery or another power line.

Further features already disclosed in connection with the use of the load balancer device for the electric charging station are not repeated here, just to cite one the load balancer device may include at least one magnet, for example in the form of a steel blade, and an electromagnet coupled to the magnet, the electromagnet being adapted to be driven by the machinery (locally or remotely), to apply the electric voltage to the electromagnet, so as the magnet steel blade lock a cable support of the second cable which is mechanically or structurally connected to magnet steel blade.

Moreover, whereas uses of the load balancer device for controlling cable or tubes for supplying water, oil or gas have been given above for exemplificative purpose, other uses are of course possible, substantially for controlling cable or tubes of any service station, the service station including therefore the electric charging station, a water supply station, an oil supply station, etc.

### Brief description of the drawings

Figure 1 is a schematic view of an electric vehicle charging station as disclosed.

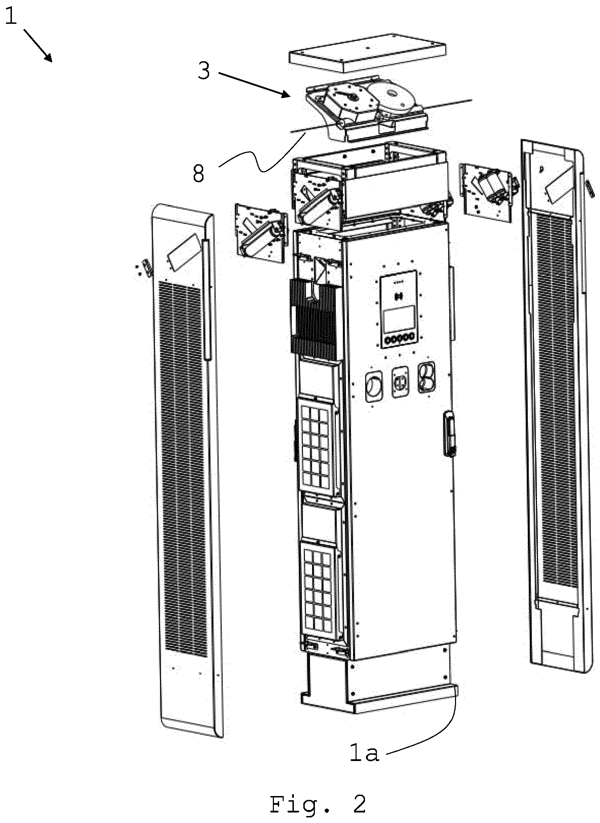

Figure 2 is a perspective view at separate parts of the electric vehicle charging station of figure 1.
Figure 3 is a perspective view of a load balancer of the electric vehicle charging station of figure 1.

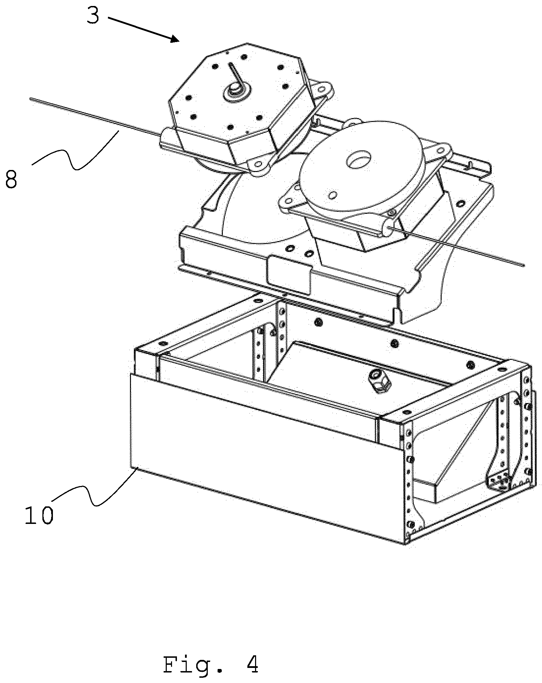

Figure 4 is another perspective view of the load balancer of the electric vehicle charging station of figure 3.
Figure 5 is a particular of the load balancer of figure 3, at separate parts.

### Detailed description of the invention

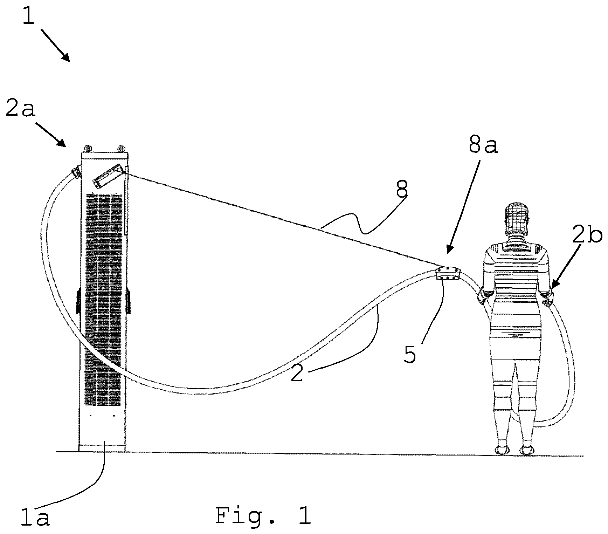

With reference to figure 1, it is schematically represented an electric vehicle charging station 1 according to the present disclosure. The electric vehicle charging station -also known as (EV) charging station, electric recharging point, charging point, charge point, electronic charging station (ECS) or electric vehicle supply equipment (EVSE)- is an element in an infrastructure that supplies electric energy for the recharging of plug-in electric vehicles, including for instance electric cars, neighborhood electric vehicles and plug-in hybrids.

The charging station includes a base station 1a -also known as base column- including a charging cable 2 which is adapted to electrically connect the electric vehicle to the base column. In this regard, an end 2a of the charging cable 2 is electrically connected to the base station 1a in non-removable way, inside the base station 1a, whereas a free end 2b of the charging cable is adapted to be connected to an electric vehicle for recharging. The free end 2b is supported by a housing at the base station and is extracted from the housing by the user when it has to be plugged at a port of the electric vehicle, for recharging. Between the two ends 2a, 2b the charging cable is extended for a predetermined measure, for instance five meters. According to the present disclosure, when the free end 2b is in the housing of the base station 1a, also the charging cable is retracted towards the base station 1a, as will be explained in further details afterward.

In use, when the user has to recharge the electric vehicle, the second end 2b of the charging cable, which is associated to a plug, is extracted from the housing, and it is connected to the port of the electric vehicle. By means of this operation, also the charging cable 2 is moved towards the electric vehicle, in particular it is freely moved, meaning that it is not subject to any force recalling the charging cable back to the base station. This freedom of movement is important to simplify the user actions, in particular to drive the charging cable and the plug to the port of the vehicle with reduced efforts.

Once the plug is plugged, recharge may be started. The recharge is driven by standard communication protocol(s) or method(s) implemented at the charging station side and eventually also at the electric vehicle side. Just to cite one, CHAdeMO is a fast-charging method for battery electric vehicles delivering up to 62.5 kW by 500 V, 125 A direct current. By means of this (or other possible) protocols, the recharge is controlled, meaning that the protocol or method detects whether recharge is interrupted, for instance due to a disconnection between the charging cable plug and the electric vehicle port or due to completion of recharge.

According to the present disclosure, the freedom to move the charging cable is controlled by the charging station in association of one among a plurality of possible operating status. In one embodiment, one status is a locking status and another status is an unlocking status. In particular, in the locking status, the charging cable is prevented from being recalled at the base station whereas in the unlocking status, the charging cable is allowed to be recalled to the base station. The locking status and the unlocking status are preferably determined by the charging station, more preferably based on a stage of the protocol or method implemented by the base station for recharging the vehicle. For instance, the locking status is set immediately before charging is started and is ended immediately after charging is ended or with some delay in respect to the end of charge, as explained thereafter. The unlocking status is set when the locking status is unset. Based on the setting, a mechanism for easing automatically recalling or simplifying bringing the charging cable to the base station is enable or disabled. Nothing prevents that more status are provided to improve physical controls of the charging cable.

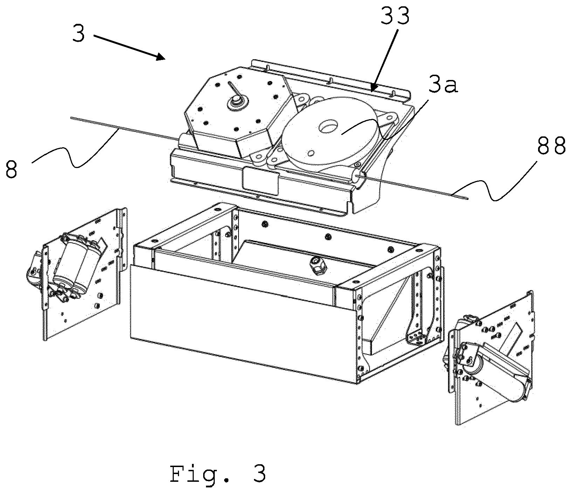

The mechanism for easing bringing or recalling the charging cable to the base station is a load balancer device 3 as for instance represented in figures from 2 to 5. The load balancer includes a second cable 8, for instance a steel multiwire cable associated to an auto winding system, for instance including spring means adapted to apply a force to the second cable 8 for winding it around a support, such as a disk shape support. The disk shape support is not shown in figure 3 because hidden by a cover 3a of the load balancer device 3, hiding also part of the charging cable 2 which is wound around the disk shape support. A force applied to the charging cable 2, for instance by the user when he pulls the charging cable, allows unwinding the second cable 8 from the disk shape support and therefore to distance an end 8a of the second cable 8 from the load balancer device 3, which is mounted at the base station. When the force applied from the user is ended, the spring means recall the second wires and therefore the end thereof 8a to the base station 1a.

The load balancer device 3 is mounted at the base station 1a and the second cable 8 is structurally or mechanically associated to the charging cable 2, for instance by means of a support or flange fixing the end 8a of the second cable 8 to a portion of the charging cable 2, for instance a portion distanced in predetermined measures from both the ends 2a and 2b of the charging cable 2.

Being the load balancer device 3 mounted at the base station 1a and the second cable 8 structurally or mechanically associated to the charging cable 2, in principle, when the force applied from the user is ended, the spring means recall also the charging cable 2, along with the second cable 8, to the base station 1a.

According to the present invention, however, the load balancer device 3 is also provided with a locking system 4 configured to lock retraction of the second cable 8 in the first operating state and to unlock retraction of the second cable 8 in the second operating state. As well, the locking system 4 may be configured to lock extraction of the second cable 8 in the first operating state and to unlock extraction of the second cable 8 in the second operating state, of to control such lock and unlock of extraction if further operating states.

The base station 1a is configured to drive the locking system 4 in the first or second operating state. For instance, when the protocol or method for controlling the recharge detects a stop of the recharge, for instance due to a loss of communication between the charging cable (or the base station) and the electric vehicle, potentially due to an intentional maneuver of the user at the plug or to any other reason, the unlocking status is set. Conversely, when the protocol or method for controlling the recharge detects that the recharge is started, for instance immediately after the plug is plugged at the port of the vehicle or in connection with another stage of the protocol or method implemented by the charging station to control the recharge, the locking status is set.

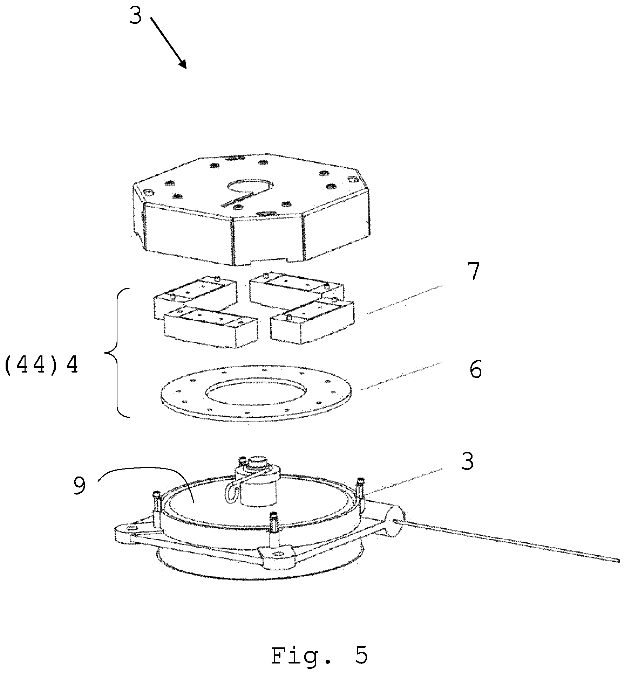

When the locking status is set at least one magnet, preferably a magnet in the form of a steel blade 6 is locked by an electromagnet 7 thereto coupled. The electromagnet 7 is driven by the base station 1a and the magnet steel blade 6 is structurally connected to the cable support 9 on which the second cable 8 is wound. In figure 5, an embodiment is represented wherein the magnet steel blade 6 is associate to four electromagnets 7 arranged at a distance of 90° on the magnet steel blade 6. Accordingly, the base station 1a is configured to drive the load balancer device 3 in the first operating state during recharge of the electric vehicle, meaning that the electromagnets 7 lock the magnet steel blade 6 in a predetermined position, corresponding to a predetermined extension of the second cable 8 and therefore to a predetermined distance of the end 8a of the second cable from the base station 1a, in particular from a housing 10 of the load balancer device 3 in the base station 1a.

At such a distance where the end 8a of the second cable 8 is placed in the first operating state of locking, the charging cable has a section hold in place by a support 5 of the load balancer device 3, a first portion suitably extended from the first end 2a to said section and a second portion suitably extended as well from said section to the second end 2b. Preferably, the portions are above the ground, i.e. not in contact thereto. During recharge, the section and the support 5 cannot be displaced from the portion reached when the charge is started.

When recharge is stopped, the second operating state of unlocking is set. The way in which the second operating state is set is preferably controlled by means of further stages, preferably introducing some delays. For instance, at a first stage, stop of the recharge is detected but the unlocking status is not immediately set. At this stage the plug may be removed from the electric vehicle port so as the user may start moving the charging cable towards the base station; however, at this stage the locking state is kept so as the charging cable is kept in position at the section which is mechanically connected to the support 5 of the load balancer device 3. At a second stage, which is initiated after a predetermined delay from the first stage or by means of a sensor detecting a load on the second cable 8, the unlocking state is set, and the second end 8a along with the support 5 and the section of the charging cable 2 associated thereto are recalled to the base station. By recalling the said section, also the portion of the cable between the first and the second end 2a, 2b and the section are approximated to the base station. The delay mentioned above simplify the maneuver of detaching the charging cable and of orderly moving one portion only of the charging cable more distant from the base station, avoiding impediments due to undesired and immediate pulls at the first stage.

As cited above, different variants of the charging station as disclosed may be provided to further improve control of the charging cable, for instance by means of more than two states. However, in the preferred embodiment at least the following controls are implemented at the base station 1a. The base station is configured to drive the load balancer device 3 in the second operating state if no recharge is ongoing and after a load is manually applied to the charging cable or after a predetermined delay. The base station 1a is configured to drive the load balancer device 3 in the second operating state with a predetermined delay after the load is manually applied to the charging cable for removing the cable from a plug of the vehicle.

Further advantageous details of the electric charging station according to the present disclosure are given hereafter.

The base station 1a includes a guidewire 11 for guiding the second cable 8; the guidewire is on a flank of the column of the base station and includes a window 12 through which the second cable 8 slides. The window may be in the flank or in a covering 13 thereof. In the unlocking state, the support 5 of the end 8a of the 13 is a preferred solution since allows to adapt presently installed base station with the load balancer device 3 according to the present disclosure. The second cable 8 is recalled to the window 12, together with the charging cable 2.

Still in an attempt to simplifying adaptation of already installed base station 1a, the load balancer device 3 is provided with the housing 10 and the housing 10 is adapted to be installed on top of the base station 1a. A side of the housing may support the guidewire 11.

A housing may be associated to more than one load balancer device 3, 33, for instance two balancer devices 3, 33 on opposite side of the base station 1a. In this case, the housing may support more guidewires, one for each second cable 8 of the corresponding load balancer device 3, 33, arranged one upside down with respect to the other for winding and unwinding in opposite direction the respective second cables.

Advantageously, the guidewire allows an efficient extraction and retraction of the second cable 8 along a substantially rectilinear direction and allows preventing twisting the charging cable 2, since this last is moved at the section fixed to the support 5 in a translatory way along the rectilinear direction determined by second cable 8.

Moreover, the load balance device 3 simplify the maneuver of the user which is levied from replacing the portion of the charging cable 2 between the first end 2a thereof and the support 5. Accordingly, the user has to handle only the remaining portion, the one between the support and the second end 2b, which is of a shorter length than the entire charging cable 2.

A method for controlling use of the charging cable of the electric vehicle charging station provides the following stages.

At a first stage, the charging cable 2 is at the base station 1a, for instance with a connector (plug) housed in a housing of the base station 1a.

At a second stage, the charging cable 2 is pulled towards an electric vehicle. At this stage, a load balancer device 3, and in particular a locking system 4 thereof, is in an unlocking state, and in such a state a second cable 8 of the load balancer device 3 is allowed to be extracted, i.e. unwind, from the load balancer device 3. The charging cable 2 fixed with a support to an end of the second cable 8 is also allowed to be distanced (extended) from the base station 1a.

At a third stage, the plug of the of the charging cable 2 is connected to a port of the electric vehicle.

At a fourth stage, the base station 1a lock the load balancer device (and in particular a locking system 4 thereof is actuated). At this stage, the base station 1a may determine the locking of the load balancer device 3 by means of different controls, one of which is, just for instance, start of recharging.

At a fifth stage, the recharge is ongoing.

At a sixth stage, the recharge is stopped. At this stage, the base station 1a may determine the stop of recharge due to different reasons, one of which is, just for instance, the battery fully recharged or a disconnection between the plug and the port, for instance due to a manual operation of the user.

At a seventh stage, the base station 1a unlock the load balancer device (and in particular the locking system 4 thereof is disactivated). At this stage, the base station 1a may determine the unlocking of the load balancer device 3 by means of different controls, one of which is, just for instance, the stop of recharge.

As another example, the base station 1a may determine the unlocking of the load balancer device 3 by means of stop of recharge and a further subsequent event, the event being for instance lapse of a predetermined delay or detection of a load on the charging cable (or on the second cable 8) due to a manual operation of the user. In such a case, between the sixth and the seventh stages, a sub stage may be executed.

At the substage, the plug of the electric cable is unplugged from the port and the portion of the charging cable 2 between the support 5 and the first end 2a of the cable is started moving towards the base station 1a by the user. Only subsequently to this substage, the seventh stage is started.

To summarize, according to the present invention, the load balancer device comprises a cable 8 and a locking system 4. The locking system serves to lock or unlock the retraction or extension of the cable 8 based on an electrical voltage. The cable 8 is intended to be mechanically or structurally associated with another cable or a tube. When this association is made, the movement of the "another cable or tube" is conditioned by the locking or unlocking on the cable 8.

The term "other cable or tube " is used because the load balancer device can be used in several service stations. For example, the load balancer device can be used in a service station for servicing electric charging of an electric car, in which case the cable 8 of the load balancer device is associated with a cable 2 which serves to recharge the electric car, indirectly controlling its movement. On the other hand, if the load balancer device is used in a service station for refueling, the cable 8 can be used in structural association with a tube inside which the fuel flows, also in this case to indirectly control its movement.

It is clear, on the basis of the description given above and the annexed figures, how to implement structural association with "other cables or tubes" of various service stations: for example, in figure 1, the support 5 is mechanically associated with the charging cable 8 and the charging cable 2 but, instead of the charging cable 2, there could be a tube of a refueling station.

The electric charging station and the load balancer device according to as claimed in the present invention are based on a single inventive concept.

## Claims

1. Electric vehicle charging station (1) including a base station (1a), a charging cable (2) having an end (2a) electrically connected to the base station (1a) inside the base station (1a) and a free end (2b) adapted to be connected to an electric vehicle for recharging, a load balancer device (3) including a second cable (8), the second cable (8) being structurally associated to the charging cable (2), **characterized by** comprising a locking system (4) configured to lock retraction or extension of the second cable (8) in a first operating state and to unlock retraction or extension of the second cable (8) in a second operating state, the base station (1a) being configured to drive the locking system (4) in the first or second operating state based on an electric voltage, wherein
the load balancer device (3) includes at least one magnet steel blade (6) and an electromagnet (7) coupled to the magnet steel blade (6), the electromagnet (7) being driven by the base station (1a) and the magnet steel blade (6) being structurally connected to a cable support (9) on which the second cable (8) is wound and wherein the electromagnet (7) is arranged on the magnet steel blade (6), the magnet steel blade (6) being movable in said second operating state or locked in said first operating state with respect to the electromagnet (7) based on said electric voltage applied to the electromagnet (7).

2. Electric vehicle charging station (1) according to claim 1, **characterized by** the fact that the electromagnet (7) includes four electromagnets (7) arranged at an angular distance of 90° on the magnet steel blade (6).

3. Electric vehicle charging station (1) according to claim 1, **characterized by** the fact that the base station (1a) is configured to drive the load balancer device (3) in the first operating state during recharge of the electric vehicle.

4. Electric vehicle charging station (1) according to claim 3, **characterized by** the fact that the base station (1a) is configured to detect the first operating state by means of communication lines of the charging cable, adapted to communicate with the electric vehicle.

5. Electric vehicle charging station (1) according to claim 1, **characterized by** the fact that the base station (1a) is configured to check if no recharge is ongoing, check if a load is manually applied to the charging cable (2), drive the load balancer device (3) in the second operating state if no recharge is ongoing and after a load is manually applied to the charging cable.

6. Electric vehicle charging station (1) according to claim 5, **characterized by** the fact that the base station (1a) is configured to drive the load balancer device (3) in the second operating state with a predetermined delay.

7. Electric vehicle charging station (1) according to claim 1, **characterized by** the fact that the load balancer device (3) includes a support (5) attached to a portion or section of the charging cable at a predetermined distance from the end (2a) electrically connected to the base station (1a) of the charging cable and attached to an end (8a) of the second cable (8) which, in use, can be distanced from the base station (1a).

8. Electric vehicle charging station (1) according to claim 5, **characterized by** the fact that the second cable (8) in said second operation state of the locking system (4) forms a predetermined angle with respect to a line (6) parallel to the ground, said angle being preferably between 10° and 60°.

9. Electric vehicle charging station (1) according to claim 1, **characterized by** including at least another load balancer device (33) including another second cable (88) and another locking system (44), said another second cable (44) being structurally associated to another charging cable and said another locking systems (44) being configured to lock retraction or extension of said another second cable (88) in a first operating state of said another second cable (88) and to unlock retraction or extension of said another second cable (88) in a second operating of said another second cable (88), the base station (1a) being configured to drive said another locking system (44) in the first or second operating state independently from the locking system of said load balancer device (3).

10. Load balancer device (3) including a cable (8) and a locking system (4), the cable (8) being adapted to be mechanically or structurally associated to another cable or tube of a service station, the locking system (4) being configured to lock retraction or extension of the cable (8) in a first operating state and to unlock retraction or extension of the cable (8) in a second operating state, wherein the load balancer device (3) is configured to associate the first and the second operating state to an electric voltage, **characterized in that** the load balancer device (3) includes at least one magnet steel blade (6) and an electromagnet (7) coupled to the magnet steel blade (6), the electromagnet (7) being driven by the base station (1a) and the magnet steel blade (6) being structurally connected to a cable support (9) on which the second cable (8) is wound, and wherein the electromagnet (7) is arranged on the magnet steel blade (6), the magnet steel blade (6) being movable in said second operating state or locked in said first operating state with respect to the electromagnet (7) based on said electric voltage applied to the electromagnet (7).

11. Load balancer device (3) according to claim 10, wherein the service station is an electric charging station, a water supply station, an oil supply station or an air supply station.

12. Load balancer device (3) according to claim 11, including mounting means on the service station and an electrical connection to the service station to receive the electric voltage directly from the service station.

13. Load balancer device (3) according to claim 11, including mounting means adapted to mount the load balancer device remotely from the service station and an electrical connection to the service station to receive the electric voltage directly from the service station.

14. Load balancer device (3) according to claim 11, including mounting means adapted to mount the load balancer device remotely from the service station and an electrical connection to receive an electric control signal from the service station, the load balancer device being further configured to control the receipt of the electric control signal from the service station and to receive the electric voltage from a power line based on the electric control signal received from the service station.

## Patentansprüche

1. Ladestation für Elektrofahrzeuge (1), umfassend eine Basisstation (1a),
ein Ladekabel (2), das ein Ende (2a), das innerhalb der Basisstation (1a) elektrisch mit der Basisstation (1a) verbunden ist, und ein freies Ende (2b) aufweist, das dazu eingerichtet ist, zum Wiederaufladen mit einem Elektrofahrzeug verbunden zu werden, eine Lastausgleichsvorrichtung (3), umfassend ein zweites Kabel (8), wobei das zweite Kabel (8) strukturell dem Ladekabel (2) zugeordnet ist, **dadurch gekennzeichnet, dass** sie ein Verriegelungssystem (4) umfasst, das dazu eingerichtet ist, ein Einziehen oder Ausziehen des zweiten Kabels (8) in einem ersten Betriebszustand zu verriegeln und ein Einziehen oder Ausziehen des zweiten Kabels (8) in einem zweiten Betriebszustand zu entriegeln, wobei die Basisstation (1a) dazu eingerichtet ist, das Verriegelungssystem (4) basierend auf einer elektrischen Spannung in den ersten oder zweiten Betriebszustand anzusteuern, wobei
die Lastausgleichsvorrichtung (3) mindestens ein Magnetstahlblatt (6) und einen Elektromagneten (7) umfasst, der mit dem Magnetstahlblatt (6) gekoppelt ist, wobei der Elektromagnet (7) durch die Basisstation (1a) angesteuert wird und das Magnetstahlblatt (6) strukturell mit einem Kabelträger (9) verbunden ist, auf den das zweite Kabel (8) aufgewickelt ist, und wobei der Elektromagnet (7) an dem Magnetstahlblatt (6) angeordnet ist, wobei das Magnetstahlblatt (6) in dem zweiten Betriebszustand beweglich oder in dem ersten Betriebszustand in Bezug auf den Elektromagneten (7) verriegelt ist, basierend auf der an den Elektromagneten (7) angelegten elektrischen Spannung.

2. Ladestation für Elektrofahrzeuge (1) nach Anspruch 1, **dadurch gekennzeichnet, dass** der Elektromagnet (7) vier Elektromagnete (7) umfasst, die in einem Winkelabstand von 90° an dem Magnetstahlblatt (6) angeordnet sind.

3. Ladestation für Elektrofahrzeuge (1) nach Anspruch 1, **dadurch gekennzeichnet, dass** die Basisstation (1a) dazu eingerichtet ist, die Lastausgleichsvorrichtung (3) während des Wiederaufladens des Elektrofahrzeugs in dem ersten Betriebszustand anzusteuern.

4. Ladestation für Elektrofahrzeuge (1) nach Anspruch 3, **dadurch gekennzeichnet, dass** die Basisstation (1a) dazu eingerichtet ist, den ersten Betriebszustand mittels Kommunikationsleitungen des Ladekabels zu erfassen, die dazu eingerichtet sind, mit dem Elektrofahrzeug zu kommunizieren.

5. Ladestation für Elektrofahrzeuge (1) nach Anspruch 1, **dadurch gekennzeichnet, dass** die Basisstation (1a) dazu eingerichtet ist, zu prüfen, ob kein Wiederaufladen stattfindet, zu prüfen, ob eine Last manuell auf das Ladekabel (2) aufgebracht wird, die Lastausgleichsvorrichtung (3) in dem zweiten Betriebszustand anzusteuern, wenn kein Wiederaufladen stattfindet und nachdem eine Last manuell auf das Ladekabel aufgebracht wurde.

6. Ladestation für Elektrofahrzeuge (1) nach Anspruch 5, **dadurch gekennzeichnet, dass** die Basisstation (1a) dazu eingerichtet ist, die Lastausgleichsvorrichtung (3) mit einer vorbestimmten Verzögerung in dem zweiten Betriebszustand anzusteuern.

7. Ladestation für Elektrofahrzeuge (1) nach Anspruch 1, **dadurch gekennzeichnet, dass** die Lastausgleichsvorrichtung (3) einen Träger (5) umfasst, der an einem Abschnitt oder Bereich des Ladekabels in einem vorbestimmten Abstand von dem mit der Basisstation (1a) elektrisch verbundenen Ende (2a) des Ladekabels angebracht ist und an einem Ende (8a) des zweiten Kabels (8) angebracht ist, welches im Gebrauch von der Basisstation (1a) beabstandet werden kann.

8. Ladestation für Elektrofahrzeuge (1) nach Anspruch 5, **dadurch gekennzeichnet, dass** das zweite Kabel (8) in dem zweiten Betriebszustand des Verriegelungssystems (4) einen vorbestimmten Winkel in Bezug auf eine zum Boden parallele Linie (6) bildet, wobei der Winkel vorzugsweise zwischen 10° und 60° beträgt.

9. Ladestation für Elektrofahrzeuge (1) nach Anspruch 1, **dadurch gekennzeichnet, dass** sie mindestens eine weitere Lastausgleichsvorrichtung (33) umfasst, die ein weiteres zweites Kabel (88) und ein weiteres Verriegelungssystem (44) umfasst, wobei das weitere zweite Kabel (44) strukturell einem weiteren Ladekabel zugeordnet ist und das weitere Verriegelungssystem (44) dazu eingerichtet ist, ein Einziehen oder Ausziehen des weiteren zweiten Kabels (88) in einem ersten Betriebszustand des weiteren zweiten Kabels (88) zu verriegeln und ein Einziehen oder Ausziehen des weiteren zweiten Kabels (88) in einem zweiten Betriebszustand des weiteren zweiten Kabels (88) zu entriegeln, wobei die Basisstation (1a) dazu eingerichtet ist, das weitere Verriegelungssystem (44) in dem ersten oder zweiten Betriebszustand unabhängig von dem Verriegelungssystem der Lastausgleichsvorrichtung (3) anzusteuern.

10. Lastausgleichsvorrichtung (3), umfassend ein Kabel (8) und ein Verriegelungssystem (4), wobei das Kabel (8) dazu eingerichtet ist, mechanisch oder strukturell einem weiteren Kabel oder Rohr einer Versorgungsstation zugeordnet zu werden, wobei das Verriegelungssystem (4) dazu eingerichtet ist, ein Einziehen oder Ausziehen des Kabels (8) in einem ersten Betriebszustand zu verriegeln und ein Einziehen oder Ausziehen des Kabels (8) in einem zweiten Betriebszustand zu entriegeln, wobei die Lastausgleichsvorrichtung (3) dazu eingerichtet ist, den ersten und den zweiten Betriebszustand einer elektrischen Spannung zuzuordnen, **dadurch gekennzeichnet, dass** die Lastausgleichsvorrichtung (3) mindestens ein Magnetstahlblatt (6) und einen Elektromagneten (7) umfasst, der mit dem Magnetstahlblatt (6) gekoppelt ist, wobei der Elektromagnet (7) durch die Basisstation (1a) angesteuert wird und das Magnetstahlblatt (6) strukturell mit einem Kabelträger (9) verbunden ist, auf den das zweite Kabel (8) aufgewickelt ist, und wobei der Elektromagnet (7) an dem Magnetstahlblatt (6) angeordnet ist, wobei das Magnetstahlblatt (6) in dem zweiten Betriebszustand beweglich oder in dem ersten Betriebszustand in Bezug auf den Elektromagneten (7) verriegelt ist, basierend auf der an den Elektromagneten (7) angelegten elektrischen Spannung.

11. Lastausgleichsvorrichtung (3) nach Anspruch 10, wobei die Versorgungsstation eine elektrische Ladestation, eine Wasserversorgungsstation, eine Ölversorgungsstation oder eine Luftversorgungsstation ist.

12. Lastausgleichsvorrichtung (3) nach Anspruch 11, umfassend Befestigungsmittel an der Versorgungsstation und eine elektrische Verbindung zu der Versorgungsstation, um die elektrische Spannung direkt von der Versorgungsstation zu empfangen.

13. Lastausgleichsvorrichtung (3) nach Anspruch 11, umfassend Befestigungsmittel, die dazu eingerichtet sind, die Lastausgleichsvorrichtung entfernt von der Versorgungsstation zu befestigen, und eine elektrische Verbindung zu der Versorgungsstation, um die elektrische Spannung direkt von der Versorgungsstation zu empfangen.

14. Lastausgleichsvorrichtung (3) nach Anspruch 11, umfassend Befestigungsmittel, die dazu eingerichtet sind, die Lastausgleichsvorrichtung entfernt von der Versorgungsstation zu befestigen, und eine elektrische Verbindung zum Empfangen eines elektrischen Steuersignals von der Versorgungsstation, wobei die Lastausgleichsvorrichtung ferner dazu eingerichtet ist, den Empfang des elektrischen Steuersignals von der Versorgungsstation zu steuern und die elektrische Spannung von einer Stromleitung basierend auf dem von der Versorgungsstation empfangenen elektrischen Steuersignal zu empfangen.

## Revendications

1. Station de charge de véhicule électrique (1) comprenant une station de base (1a), un câble de charge (2) comportant une extrémité (2a) reliée électriquement à la station de base (1a) à l'intérieur de la station de base (1a) et une extrémité libre (2b) conçue pour être reliée à un véhicule électrique aux fins de recharge, un dispositif d'équilibrage de charge (3) comprenant un deuxième câble (8), le deuxième câble (8) étant structurellement associé au câble de charge (2), **caractérisée en ce qu'**elle comprend un système de verrouillage (4) configuré pour verrouiller la rétraction ou l'extension du deuxième câble (8) dans un premier état de fonctionnement et pour déverrouiller la rétraction ou l'extension du deuxième câble (8) dans un deuxième état de fonctionnement, la station de base (1a) étant configurée pour commander le système de verrouillage (4) dans le premier ou le deuxième état de fonctionnement en fonction d'une tension électrique, dans laquelle
le dispositif d'équilibrage de charge (3) comprend au moins une lame en acier magnétique (6) et un électroaimant (7) couplé à la lame en acier magnétique (6), l'électroaimant (7) étant commandé par la station de base (1a) et la lame en acier magnétique (6) étant structurellement reliée à un support de câble (9) sur lequel le deuxième câble (8) est enroulé, et dans laquelle
l'électroaimant (7) est disposé sur la lame en acier magnétique (6), la lame en acier magnétique (6) étant mobile dans ledit deuxième état de fonctionnement ou verrouillée dans ledit premier état de fonctionnement par rapport à l'électroaimant (7), en fonction de ladite tension électrique appliquée à l'électroaimant (7).

2. Station de charge de véhicule électrique (1) selon la revendication 1, **caractérisée en ce que** l'électroaimant (7) comprend quatre électroaimants (7) disposés selon un espacement angulaire de 90° sur la lame en acier magnétique (6).

3. Station de charge de véhicule électrique (1) selon la revendication 1, **caractérisée en ce que** la station de base (1a) est configurée pour commander le dispositif d'équilibrage de charge (3) dans le premier état de fonctionnement pendant la recharge du véhicule électrique.

4. Station de charge de véhicule électrique (1) selon la revendication 3, **caractérisée en ce que** la station de base (1a) est configurée pour détecter le premier état de fonctionnement au moyen de lignes de communication du câble de charge, conçues pour communiquer avec le véhicule électrique.

5. Station de charge de véhicule électrique (1) selon la revendication 1, **caractérisée en ce que** la station de base (1a) est configurée pour vérifier qu'aucune recharge n'est en cours, vérifier si une charge est appliquée manuellement au câble de charge (2), commander le dispositif d'équilibrage de charge (3) dans le deuxième état de fonctionnement si aucune recharge n'est en cours et après qu'une charge a été appliquée manuellement au câble de charge.

6. Station de charge de véhicule électrique (1) selon la revendication 5, **caractérisée en ce que** la station de base (1a) est configurée pour commander le dispositif d'équilibrage de charge (3) dans le deuxième état de fonctionnement avec un délai prédéterminé.

7. Station de charge de véhicule électrique (1) selon la revendication 1, **caractérisée en ce que** le dispositif d'équilibrage de charge (3) comprend un support (5) fixé à une partie ou section du câble de charge, à une distance prédéterminée de l'extrémité (2a) du câble de charge qui est reliée électriquement à la station de base (1a), et fixé à une extrémité (8a) du deuxième câble (8) qui, lors de l'utilisation, peut être éloignée de la station de base (1a).

8. Station de charge de véhicule électrique (1) selon la revendication 5, **caractérisée en ce que** le deuxième câble (8), dans ledit deuxième état de fonctionnement du système de verrouillage (4), forme un angle prédéterminé par rapport à une ligne (6) parallèle au sol, ledit angle étant de préférence compris entre 10° et 60°.

9. Station de charge de véhicule électrique (1) selon la revendication 1, **caractérisée en ce qu'**elle comprend au moins un autre dispositif d'équilibrage de charge (33) comprenant un autre deuxième câble (88) et un autre système de verrouillage (44), ledit autre deuxième câble (44) étant structurellement associé à un autre câble de charge et lesdits autres systèmes de verrouillage (44) étant configurés pour verrouiller la rétraction ou l'extension dudit autre deuxième câble (88) dans un premier état de fonctionnement dudit autre deuxième câble (88) et pour déverrouiller la rétraction ou l'extension dudit autre deuxième câble (88) dans un deuxième fonctionnement dudit autre deuxième câble (88), la station de base (1a) étant configurée pour commander ledit autre système de verrouillage (44) dans le premier ou le deuxième état de fonctionnement indépendamment du système de verrouillage dudit dispositif d'équilibrage de charge (3).

10. Dispositif d'équilibrage de charge (3) comprenant un câble (8) et un système de verrouillage (4), le câble (8) étant conçu pour être associé mécaniquement ou structurellement à un autre câble ou tube d'une station de service, le système de verrouillage (4) étant configuré pour verrouiller la rétraction ou l'extension du câble (8) dans un premier état de fonctionnement et pour déverrouiller la rétraction ou l'extension du câble (8) dans un deuxième état de fonctionnement, dans lequel le dispositif d'équilibrage de charge (3) est configuré pour associer les premier et deuxième états de fonctionnement à une tension électrique, **caractérisé en ce que** le dispositif d'équilibrage de charge (3) comprend au moins une lame en acier magnétique (6) et un électroaimant (7) couplé à la lame en acier magnétique (6), l'électroaimant (7) étant commandé par la station de base (1a) et la lame en acier magnétique (6) étant structurellement reliée à un support de câble (9) sur lequel le deuxième câble (8) est enroulé, et dans lequel l'électroaimant (7) est disposé sur la lame en acier magnétique (6), la lame en acier magnétique (6) étant mobile dans ledit deuxième état de fonctionnement ou verrouillée dans ledit premier état de fonctionnement par rapport à l'électroaimant (7), en fonction de ladite tension électrique appliquée à l'électroaimant (7).

11. Dispositif d'équilibrage de charge (3) selon la revendication 10, dans lequel la station de service est une station de charge électrique, une station d'alimentation en eau, une station d'alimentation en huile ou une station d'alimentation en air.

12. Dispositif d'équilibrage de charge (3) selon la revendication 11, comprenant des moyens de montage sur la station de service et une connexion électrique à la station de service pour recevoir la tension électrique directement depuis la station de service.

13. Dispositif d'équilibrage de charge (3) selon la revendication 11, comprenant des moyens de montage conçus pour monter le dispositif d'équilibrage de charge à distance de la station de service et une connexion électrique à la station de service pour recevoir la tension électrique directement depuis la station de service.

14. Dispositif d'équilibrage de charge (3) selon la revendication 11, comprenant des moyens de montage conçus pour monter le dispositif d'équilibrage de charge à distance de la station de service et une connexion électrique destinée à recevoir un signal de commande électrique depuis la station de service, le dispositif d'équilibrage de charge étant en outre configuré pour contrôler la réception du signal de commande électrique depuis la station de service et pour recevoir la tension électrique depuis une ligne d'alimentation en fonction du signal de commande électrique reçu depuis la station de service.
